# EUROPEAN PATENT APPLICATION

(11) **EP 2 216 504 A2**
(43) Date of publication of application: **11.08.2010**
(21) Application number: 10250175.6
(22) Date of filing: 02.02.2010
(51) Int. Cl.: E21F 3/00, F24F 5/00

(54) **A method and apparatus for cooling an underground space**

(30) Priority: 05.02.2009 GB 0901957
(71) Applicant: Linde AG, 80331 München (DE)
(72) Inventor: Derrick Norvill, Lincolnshire, LN8 3JJ (GB)
(74) Representative: Wickham, Michael

(57) **Abstract**

An underground space (1) is cooled by introducing a liquefied cryogenic gas (9) comprising a human life sustaining proportion of oxygen (for example, liquid air) into the underground space and allowing the liquefied cryogenic gas to evaporate therein. The underground space may be a tunnel (2) or station in an underground railway station. The liquefied cryogenic gas (9) may be introduced into a tunnel between a station and a train (4) moving toward the station, and the train pushes the evaporated gas into the station.

## Description

The present invention relates to a method and an apparatus for cooling an underground space such as an underground railway tunnel or station.

The cooling of underground installations presents a number of challenges, especially for deep underground installations such as underground railway systems. When a new underground line is built the temperature is typically that of the surrounding ground. For example, in London the temperature of a new underground railway line would be about 14°C. However, as trains and other machinery operate and generate heat the air in the tunnels and stations warms up and transfers heat to the surrounding ground, unless very effective ventilation is provided. That results in a slow rise in temperature. For example, in 1900 temperatures in the Bakerloo line in London were recorded at about 14°C. By 2007, however, that figure more than doubled. The increase in temperature is exacerbated by a recent increase in passenger numbers which has caused a rise in train operations, and by general warming of the climate.

The heat in an underground railway system is typically generated by the trains, by other equipment and by body heat from passengers. It has been calculated that in the London underground system about 80% of the heat is generated by operation of the trains, 15% by other equipment, and 5% is generated by passengers.

One conventional way of cooling underground railway systems is to provide ventilation shafts spaced along the tunnels by means of which warm air may escape to the surface and cool air may be supplied to the underground tunnels and stations. Trains moving through the tunnels push air along before them and draw air down into the tunnels through stations and ventilation shafts in a so-called piston effect. The piston effect increases the supply of cool air through the ventilation shafts and through the station entrances. However, the piston effect ceases when the trains stop moving.

A number of proposals have been made to improve the cooling of underground railway systems. One suggestion has been to replace conventional brakes on trains, which rely on friction to slow the train down and thereby generate heat energy which is lost to the surrounding atmosphere, with regenerative braking systems. Such regenerative braking systems convert some of the kinetic energy of the train into electrical energy which is fed back into the train's power supply rather than being converted into heat and lost to the surroundings. Such braking systems have the advantage of reducing overall energy consumption but have not fully solved the problem caused by increased temperatures in underground railway systems.

In recent years a ground water cooling system has been installed at Victoria Station in the London underground railway system. In that system, heat is exchanged between the warm air within the tunnels and stations and ground water or water from aquifers. However, that system is limited in that suitable ground water and aquifers are not present in the vicinity of many underground train lines and it also requires sizable machinery to be installed which presents a severe challenge in the cramped confines of the underground stations and tunnels.

Cooling of the tube trains themselves using conventional air conditioning units has also been proposed but has not been widely adopted, at least on the London underground railway system, because of the lack of space for equipment on trains and the problem of dispersing the extra heat generated by the equipment. Furthermore, if a train were to be stationary inside a tunnel for any length of time the heat pumped out of the train by the air conditioning system would cause local temperatures within the tunnel to rise rapidly thereby leading the air conditioning unit to consume more energy. At some point the system would be unable to cope and temperatures inside the train would rise rapidly. One proposal to counter that problem is to have reservoirs of ice carried on the train which would be cooled by air conditioning when the train surfaces above ground and could be used to cool the train when the train enters the underground tunnels. However, the additional weight of the ice onboard the train will cause an increase in the amount of energy required to move the train and thereby result in both an increase in cost and also an increase in the amount of heat generated by the train during its passage though the underground railway system.

There remains a need for an improved method and apparatus for cooling underground spaces such as underground railway systems, mines and the like.

The present invention provides a method of cooling an underground space comprising the step of introducing a liquefied cryogenic gas comprising a human life sustaining proportion of oxygen into the underground space and allowing the liquefied cryogenic gas to evaporate.

The underground space may be any underground space where there is a need for cooling in order to improve the comfort of people in the underground space, for example, mines, tunnels, underground storage facilities and the like. The underground space will therefore be one which is accessed by people. In one embodiment the underground space is a tunnel or station in an underground railway system. The term "underground railway system" should be taken to refer to any railway in which all or a part of the railway track runs through underground tunnels and has at least one underground station and which thereby gives rise to a difficulty in maintaining the tunnels and underground station areas at a temperature which is comfortable for passengers.

The step of introducing liquefied cryogenic gas into the underground space may be accomplished by any suitable means. For example, the liquefied cryogenic gas may be introduced into the underground space through one or more nozzles arranged in the roof and/or walls of the underground space. Optionally, during the step of introducing the liquefied cryogenic gas, a spray of the liquefied cryogenic gas is formed.

During the introduction of the liquefied cryogenic gas into the underground space it is desirable to avoid extreme cooling of any machinery or other equipment in the underground space which could over time lead to it failing. The underground space typically contains one or more persons. For reasons of safety, therefore, it is desirable that the step of introducing the liquefied cryogenic gas into the underground space does not cause localised cooling to an extent which would be hazardous to the health of any person located in or close to the point of introduction. Alternatively, a control mechanism may be provided which allows the introduction of the liquefied cryogenic gas to be disabled when any person is present in the area adjacent to the introduction point and may thereby be likely to be hurt by the liquefied cryogenic gas. Where the underground space is an underground railway system, the crew and passengers aboard the trains will in general be protected from the liquefied cryogenic gas by the train, although it will be desirable to avoid direct contact between the train and the liquefied cryogenic gas in order to avoid undue cooling of mechanical components within the train.

The liquefied cryogenic gas will typically be free of toxic gases which would be injurious to the health of people travelling within or otherwise occupying the underground space. Moreover, the liquefied cryogenic gas must comprise enough oxygen to sustain a human life in order to avoid a hazard of suffocation. It is also desirable that the oxygen is not present in an amount that cause an enhanced risk of fire in the underground space. It will understood that the term "liquefied cryogenic gas" as used herein may refer to a single gas or to a mixture of gases in liquid form having a boiling point at atmospheric pressure of lower than -50°C, optionally lower than -100°C, for example, lower than -150°C. Optionally, the liquefied cryogenic gas is liquid air. Optionally, the liquid air is natural liquid air, that is, the product of liquefying atmospheric air without removing or adding any component. The balance between nitrogen and oxygen in such natural liquid air will correspond to that present in atmospheric air. Alternatively, the liquid air may be synthetic liquid air, that is, a liquefied gas which is formed by mixing together oxygen and one or more other liquefied gases, for example nitrogen, to form a liquefied gas mixture which upon evaporation forms a gas which is breathable by humans. Typically, the synthetic liquid air will contain a major proportion of nitrogen and a smaller proportion of oxygen. It is not necessary that the synthetic liquid air has precisely the same oxygen content as atmospheric air. For example, the synthetic liquid air may comprise from 7 to 23% by volume of oxygen, preferably between 18 to 22% by volume of oxygen and more preferably from 19 to 21% by volume of oxygen. The liquid air optionally comprises between 75 and 85% by volume of nitrogen, for example, between 77 and 81 % by volume of nitrogen.

After the liquefied cryogenic gas has been introduced into the underground space it will typically evaporate rapidly to form a cloud of cold gas which then mixes with the atmosphere in the underground space thereby cooling that underground space. The term "evaporate" as used herein in respect of the liquefied cryogenic gas should be taken to refer to any process including evaporation, boiling and vaporisation by which the liquefied cryogenic gas transforms from a liquid state to a gaseous state. The method of the invention thereby provides rapid and effective cooling to the underground space. Moreover, as the equipment required at the point of delivery for introducing the liquefied cryogenic gas can be relatively small it is well suited to the needs of underground systems such as underground railways where it is difficult to install large equipment. The method of the invention does not require heat exchangers and other associated equipment to be installed within the underground space and is well suited to the cooling of underground railway systems where large amounts of heat are generated by the trains and by other equipment and by the passengers on the trains.

Where the underground space is a part of an underground railway system the liquefied cryogenic gas may be introduced into any suitable part of the underground railway system, for example, into a tunnel or a station. However, for reasons of safety and to promote mixing of the cold gas formed by evaporation of the liquefied cryogenic gas with the atmosphere present in the underground railway before it comes into contact with passengers in a station, the method may optionally may be one in which the liquefied cryogenic gas is introduced into a tunnel between a station and a train moving toward a station such that the gas formed by evaporation of liquefied cryogenic gas is pushed into the station by the train. The method may also involve the introduction of additional liquefied cryogenic gas into the underground space and the use of mechanical means such as fans to mix and/or circulate the evaporated gas around the underground space.

The liquefied cryogenic gas may be introduced into the underground space continuously or batchwise. Optionally, the liquefied cryogenic gas is introduced into the underground space batchwise. For example, where the underground space is an underground railway system the method of the invention may involve introducing batches of liquefied cryogenic gas into the underground space to coincide with the movements of the trains as mentioned above. The size of the individual batches of the liquefied cryogenic gas to be introduced may vary within a large range and will be determined according to the degree of cooling required, the desired frequency of the introductions of liquefied cryogenic gas and the specific heats of vaporisation and the specific heat capacity of the liquefied cryogenic gas. The size of the batches may for example be in the range of from 10 kg to 200 kg of liquefied cryogenic gas, for example within the range of from 20 kg to 80 kg of liquefied cryogenic gas. It has been calculated that in order to cool a typical station on a London underground system by 5°C a batch of around 40 kg of liquefied air would be required.

The method of the invention may be accomplished using any suitable apparatus. For example, the liquid cryogenic gas may be held in a storage tank, which is optionally located above ground, and may be supplied to the underground space through a thermally insulated conduit. Alternatively, the liquefied cryogenic gas may be made in a plant located above ground and fed directly to the underground space through a thermally insulated conduit.

The introduction of a liquefied cryogenic gas into the underground space is preferably controlled in response to the temperature in the underground space. For example, the arrangement may be that the temperature in the underground space is monitored and when the temperature in the underground space reaches a certain predetermined level one or more batches of liquefied cryogenic gas are introduced into the underground space until the temperature has fallen to a second predetermined level, at which point the introduction of liquefied cryogenic gas ceases until the temperature has risen back to the first predetermined level.

The cool gas generated by evaporation of the liquefied cryogenic gas is optionally mixed with the atmosphere in the underground space using fans.

The invention also provides in a second aspect an apparatus for cooling an underground space comprising a source of liquefied cryogenic gas comprising a human life sustaining proportion of oxygen, a means for introducing the liquefied cryogenic gas into the underground space, and control means for controlling the introduction of the liquefied cryogenic gas into the underground space.

The means for introducing the liquefied cryogenic gas into the underground space may be, for example, one or more spray nozzles. Alternatively, the means for introducing the liquefied cryogenic gas into the underground space may be a sintered block. The means for introducing the cryogenic gas into the underground space is preferably arranged to release the cryogenic gas from the roof or ceiling of the underground space. The means for introducing the liquefied cryogenic gas optionally comprises a conditioning apparatus to adjust the temperature and/or pressure of the cryogenic gas prior to injection, for example, to obtain the desired flow and/or spread of the liquefied cryogenic gas into the underground area. The means for introducing the liquefied cryogenic gas onto the underground space will typically be communicate with the source of liquefied cryogenic gas via a thermally insulated conduit, for flow of the liquefied cryogenic gas.

The underground space may be, for example a tunnel or station area in an underground railway. The underground space may be provided with one or more air curtains to retain cooled air within the underground space, for example, within a station in an underground railway.

The source of the liquefied cryogenic gas may be a plant for generating liquefied cryogenic gas, for example, liquid air. Preferably, the source of liquefied cryogenic gas is a storage tank containing the liquefied cryogenic gas. The storage tank may be located in the underground space. In that case the storage tank may be supplied with liquefied cryogenic gas either via a thermally insulated conduit extending from the surface, for example down a ventilation shaft, or alternatively the storage tank may be arranged to be supplied with liquefied cryogenic gas carried in on a train. The storage tank is optionally located above ground so that it can be conveniently accessed by supply vehicles. In that case, it will be connected to the underground space via one or more thermally insulated conduits, for example, running down a ventilation shaft, so that when desired liquefied cryogenic gas can flow from the above ground storage tank down the thermally insulated conduit and into the underground space.

Optionally, the apparatus comprises a sensor to detect when a train is approaching a station, and the control means and the means for introducing the liquefied cryogenic gas are arranged to introduce the liquefied cryogenic gas into the tunnel ahead of the train, so that the train pushes a volume of cool gas generated by evaporation of the liquefied cryogenic gas into the station, thereby cooling the station.

The apparatus may also comprise fans arranged to help mix gas formed by evaporation of the liquefied cryogenic gas with the surrounding atmosphere.

The invention provides in a further aspect an underground railway system provided with a cooling apparatus comprising a storage tank for liquefied cryogenic gas located above ground, one or more spray nozzles located in a tunnel of the underground railway system for the introduction of liquefied cryogenic gas into the tunnel and thermally insulated conduits connecting the one or more spray nozzles with the storage tank for the flow liquefied cryogenic gas from the storage tank to the one or more spray nozzles, the apparatus also comprising a sensor to detect a train approaching the one or more spray nozzles and control means arranged to control the introduction of liquefied cryogenic gas into the tunnel ahead of the train so that the train pushes gas formed by the evaporation of the cryogenic gas down the tunnel and into the station, thereby cooling the station.

The method and apparatus of the invention will now be described for the purpose of illustration only with reference to the figure in which:

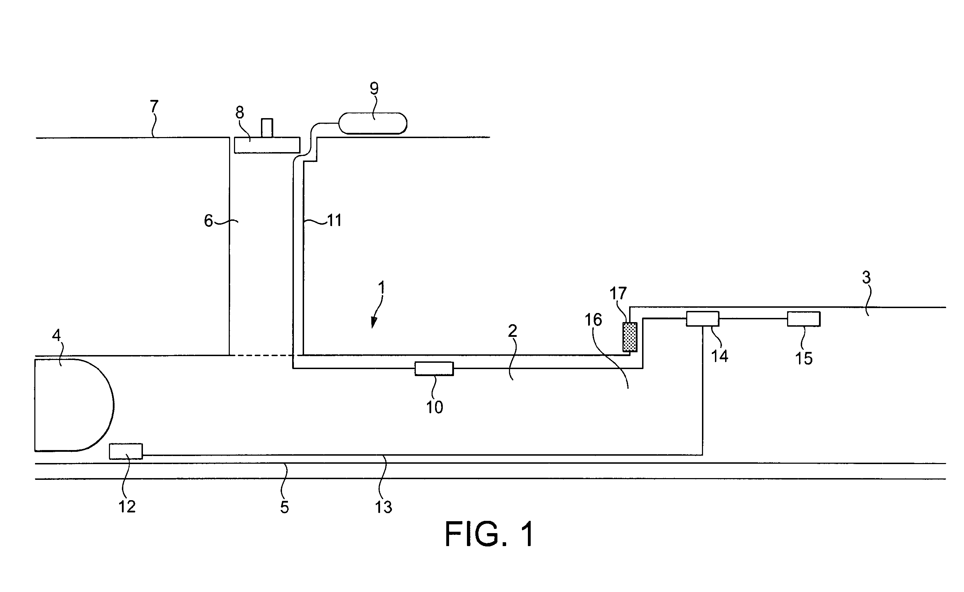

- Figure 1: shows a section through an underground railway system having a cooling apparatus according to the invention.

Figure 1 depicts a part of an underground railway system 1. The figure is not to scale. The underground railway system I comprises a section of tunnel 2 and a station 3. The train 4 runs along tracks 5 fixed to the bottom of the tunnels and station areas. The ventilation shaft 6 is provided to connect tunnel 2 with the surface 7 so that air may be pumped into the tunnel 2 by a fan 8 located at the upper end of ventilation shaft 6.

The cooling system according to the invention comprises a storage tank 9 for liquid air, and a spray nozzle 10 located in the roof of tunnel 2 for spraying liquid air into the tunnel at a location just outside station 3. Liquid air is supplied from storage tank 9 to nozzle 10 through thermally insulated conduit 11 which runs from storage tank 9 down the inside of ventilation shaft 6 and along the roof of the tunnel 2 to nozzle 10.

A sensor 12 is located in tunnel 2 to detect the approach of a train 4 toward the nozzle 10 and the station 3. Sensor 12 is connected via the signal carrier 13 to control means 14, which is typically a computer.

Station 3 is provided with temperature sensor 15 which is also connected to control means 14.

The apparatus is arranged such that temperature sensor 15 monitors the temperature in station 3 and when that temperature reaches a predetermined level, say 25°C, control means 14 is activated to respond to a signal from sensor 12 indicating the approach of the next train 4 by opening a valve (not shown) in spray nozzle 10 for a predetermined period allowing an amount, say 40 kg, of liquid air to flow from storage tank 9 through conduit 11 and out of spray nozzle 10 to form a spray of liquid air in tunnel 2. That liquid air evaporates rapidly to form a cloud of cold air in tunnel 2. That cloud of cold air is pushed by the approaching train 4 along tunnel 2 and into station 3. As it travels it mixes with atmospheric air in the tunnel 2 and in the station 3 thereby cooling the atmosphere. That mass of cool air causes the temperature in the station 3 to drop by approximately 5°C.

The process is repeated when the next train 4 approaches station 3 until the temperature in tunnel 2 has reduced to an acceptable predetermined level, for example, 17°C, at which point the control means ceases to cause the valve in spray nozzle 10 to be opened in response to an approaching train.

The entrance 16 of tunnel 2 in the station 3 may also be protected by air curtain device 17 which projects an air curtain across tunnel entrance 16 thereby preventing the escape of cool air from station 3 back down tunnel 2. Similar air curtains may be provided at the passenger entrances and exits to and from station 3, thereby helping to retain the cool air within the station 3.

## Claims

1. A method of cooling an underground space, comprising the step of introducing a liquefied cryogenic gas comprising a human life sustaining proportion of oxygen into the underground space and allowing the liquefied cryogenic gas to evaporate.

2. A method as claimed in claim 1, in which the liquefied cryogenic gas is liquid air.

3. A method as claimed in claim 1 or claim 2 in which the underground space is a tunnel or station in an underground railway system.

4. A method as claimed in claim 3 in which the liquefied cryogenic gas is introduced into a tunnel between a station and a train moving toward the station, and the train pushes the evaporated gas into a station.

5. A method as claimed in claim 3 or claim 4 in which the liquefied cryogenic gas is introduced batchwise, with the size of the batches being in the range of from 10 kg to 200 kg of liquefied cryogenic gas.

6. A method as claimed in any preceding claim in which liquefied cryogenic gas is held in a storage tank and is supplied to the underground space through a thermally insulated conduit.

7. A method as claimed in any preceding claim in which the introduction of the liquefied cryogenic gas is controlled in response to the temperature in the underground space.

8. A method as claimed in any preceding claim in which the cooled gas generated by the evaporation of the liquefied cryogenic gas is mixed with the atmosphere using fans.

9. An apparatus for cooling an underground space comprising a source of liquefied cryogenic gas comprising a human life sustaining proportion of oxygen, a means for introducing the liquefied cryogenic gas into the underground space and control means for controlling the introduction of liquefied cryogenic gas into the underground space.

10. An apparatus as claimed in claim 9 in which the underground space is a tunnel or a station area in an underground railway.

11. An apparatus as claimed in claim 9 or claim 10 in which the control means comprises a sensor to detect when a train is approaching a station and the control means and the means for introducing liquefied cryogenic gas are arranged to introduce the liquefied cryogenic gas into the tunnel ahead of the train, so that the train pushes a volume of cool gas generated by evaporation of the liquefied cryogenic gas into the station, thereby cooling the station.

12. An apparatus as claimed in any of claims 9 to 11 which also comprises fans arranged to help mix gas formed by evaporation of the liquefied cryogenic gas with the surrounding atmospheric air.

13. An apparatus as claimed in any of claim 9 to 12 in which the source of liquefied cryogenic gas is a storage tank.

14. An apparatus as claimed in claim 13 in which the storage tank is above ground.

15. An apparatus as claimed in any of claims 9 to 14 in which the liquefied cryogenic gas is liquid air.
